# EUROPÄISCHE PATENTSCHRIFT

(11) **EP 2 550 733 B1**
(45) Veröffentlichungstag und Bekanntmachung des Hinweises auf die Patenterteilung: **04.12.2019**
(21) Anmeldenummer: 11711816.6
(22) Anmeldetag: 22.03.2011
(51) Int. Cl.: H02P 23/04

(54) **VERMEIDUNG VON TORSIONSANREGUNGEN IN UMRICHTERGEFÜHRTEN VERDICHTERSTRÄNGEN**
AVOIDANCE OF TORSIONAL EXCITATIONS IN CONVERTER-CONTROLLED COMPRESSOR TRAINS
ÉVITEMENT DE L'APPARITION DE TORSION DANS DES TRAINS DE COMPRESSEURS COMMANDÉS PAR CONVERTISSEURS

(30) Priorität: 21.03.2011 WO PCT/EP2011/054225; 22.03.2010 DE 102010012268
(43) Veröffentlichungstag der Anmeldung: 30.01.2013
(73) Patentinhaber: Siemens Aktiengesellschaft, 80333 München (DE)
(72) Erfinder: HÜTTEN, Volker, 47447 Moers (DE); WAGNER, Norbert, 46244 Bottrop (DE)
(86) Internationale Anmeldenummer: PCT/EP2011/054366
(87) Internationale Veröffentlichungsnummer: WO 2011/117248

(56) Entgegenhaltungen:
- SCHRAMM S ET AL: "Damping torsional interharmonic effects of large drives", POWER ELECTRONICS AND MOTION CONTROL CONFERENCE, 2009. IPEMC '09. IEEE 6TH INTERNATIONAL, IEEE, PISCATAWAY, NJ, USA, 17. Mai 2009 (2009-05-17), Seiten 484-490, XP031535158, ISBN: 978-1-4244-3556-2
- VOLKER HÜTTEN ET AL: "TORSIONAL INTERHARMONIC INTERACTION STUDY OF 75 MW DIRECT-DRIVEN VSDS MOTOR COMPRESSOR TRAINS FOR LNG DUTY", PROCEEDINGS OF THE THIRTY-SEVENTH TURBO MACHINERY SYPOSIUM 2008,, 1. Januar 2008 (2008-01-01), Seiten 57-66, XP007920625,

## Beschreibung

Die Erfindung betrifft eine Maschine mit einem Umrichter-geführten Antrieb mit variabler Drehfrequenz,
mit einer Arbeitsmaschine, wobei der Antrieb und die Arbeitsmaschine derart miteinander verbunden sind, dass ein Drehmoment übertragbar ist,
wobei die Maschine mindestens einen Rotor umfasst,
mit einem Umrichter, der elektrisch an den Antrieb angeschlossen ist und eine Eingangsfrequenz auf eine Ausgangsfrequenz umrichtet,
wobei der Umrichter derart ausgebildet ist, dass sich in einem Campbell-Diagramm bezogen auf die Maschine (WM) Schnittpunkte der vom Antrieb anregbaren Torsionseigenfrequenz des Rotors mit V-förmigen symmetrischen Geraden der interharmonischen Erregerfrequenz für Ausgangsfrequenzen F1, F2, F3, ..., Fi ergeben.

Derartige Maschinen weisen mindestens einen Rotor auf und können auch mehrere Rotoren umfassen, welche auch Bestandteil eines zwischengeordneten Getriebes sein können. Wenn es sich um mehrere Rotoren handelt, so ist die Erfindung auf jeden einzelnen anwendbar. Bei einem einzelnen Rotor ist der Antriebsrotor mit dem Arbeitsmaschinenrotor entlang einer gemeinsamen Drehachse zu einem Wellenstrang fest miteinander verbunden.

Bevorzugtes Anwendungsgebiet der Erfindung ist der Leistungsbereich von mindestens 1MW Aufnahmeleistung, welcher sich hinsichtlich der Abmessungen und der Materialauswahl und der Verwendung von bedeutend kleineren Aggregaten grundlegend unterscheidet.

Durch das Gleichrichten und im nächsten Schritt das Wechselrichten innerhalb des Umrichters auf die Ausgangsfrequenz bzw. die gewünschte Arbeitsfrequenz werden neben der Arbeitsfrequenz auch harmonische und interharmonische Frequenzanteile im elektrischen Speisesignal des Motors generiert.

Wenn durch die Fourieranalyse (schnelle Fourier-Transformation) unter anderen auch Frequenzanteile ermittelt werden, die nicht ganzzahlige Vielfache der Frequenz des Speisesignals sind, nennt man diese Komponenten Interharmonische.

Diese harmonischen und interharmonischen Frequenzen im elektrischen Speisesignal des Motors werden im Luftspalt des Motors als erregende Torsionsmomente in das mechanische System eingeleitet.

Ein Campbell-Diagramm ermöglicht durch diese Synopse von Rotordrehzahl, Erregerfrequenzen und Eigenfrequenzen eine Beurteilung der Laufkultur einer Maschine in einem Drehzahlbereich. Die X-Achse des Campbell-Diagramm bzw. die Abszisse gibt die Drehzahl des Rotors der betrachteten Maschine wieder. Wenn ein drehzahlabhängiger Schwingungsverlauf, beispielsweise einer Torsionsschwingung einer Rotorwelle, mittels Fourier-Transformation aus dem Zeitbereich in den Frequenzbereich transformiert wird, so stellen sich diese im Campbell-Diagramm als eine steigende und eine fallende Geraden über der X-Achse dar, wobei diese die Drehzahl des Rotors wiedergibt. Ordnungen (O1, O2, ...) der Fourier-Transformation spiegeln sich dann in diesen als Mittelpunktstrahlen erscheinenden Geraden wieder, deren Steigung proportional zur jeweiligen Ordnungszahl sind.
Auf der Ordinate wird die Frequenz f der Eigenfrequenz des Rotors bzw. des rotierenden Bauteils, welches der Betrachtung unterzogen wird, wiedergegeben. Die Eigenfrequenzen sind als Toleranzband wiedergegeben, dessen jeweilige Breite sich durch die Ungenauigkeit der Modelbildung und ggf. andere Varianzen ergibt. In der Folge bezieht sich die Torsionseigenfrequenz - wenn nicht anders angegeben - stets auf das beschriebene Toleranzband. Die Brandbreite des Toleranzbandes ergibt sich schon aus Unsicherheiten der Geometrie wegen unabdingbarer Fertigungstoleranzen. Bevorzugt wird ein Toleranzband hier derart breit angenommen, dass eine Berechnung direkt verschiedene Ausbildungen der Maschine erfasst, so dass diese Varianten von der Dimensionierung ebenfalls abgedeckt sind. Dementsprechend kann es sich bei dem Toleranzband bevorzugt um eine bewusste Unschärfe handeln.

Zusätzlich werden harmonische Erregerfrequenzen dargestellt, welche sich als Geraden parallel zur Abszisse darstellen, wenn sie unabhängig von der Drehzahl sind. Wenn die Erregerfrequenz mit der Drehzahl veränderlich ist stellt sie sich als ansteigende oder fallende Gerade durch den Ursprung dar. Befindet sich die Maschinendrehzahl in einem Bereich, in dem Erregerfrequenzverläufe das Toleranzband von Eigenfrequenzen schneiden, ist mit erhöhten Schwingungsamplituden zu rechnen.

Interharmonischen Erregerfrequenzen stellen sich im Campbell-Diagram als V-förmige symmetrische Strahlen für Ausgangsfrequenzen F1, F2, F3, ...; Fn dar. Wobei F1, ..., Fi, ...Fn gruppiert sind in Konzentrationsbereiche G1, ..., Gi, ...Gz, wobei in Gi zueinander nahe liegende Fi zusammengefasst sind, die miteinander einen gemeinsamen Ausgangspunkt bilden.

Die obere und untere Grenze des Konzentrationsbereichs G1, ..., Gi, ...Gz sind definiert durch den Schnittpunkt der niedrigsten Torsionseigenfrequenz des Rotors mit den beiden Geraden des Strahlenpaars der Interharmonischen erster Ordnung des jeweiligen Konzentrationsbereichs G1, ..., Gi, ...Gz. Der Schnittpunkt bezeichnet bei Interharmonischen stets die Koordinaten mit der größten Frequenz hinsichtlich des Bereichs des Toleranzbandes, der von der Interharmonischen geschnitten wird. Soweit eine Anregung der zweiten und/oder dritten Torsionseigenfrequenz mechanisch möglich ist, ist diese in gleicher Weise (mutatis mutandis) wie zuvor für die erste Torsionseigenfrequenz beschrieben zu berücksichtigen. Stellt man die harmonischen und interharmonischen Erregerfrequenzen gemeinsam mit den Torsionseigenfrequenzen des mechanischen Systems in einem Campbell-Diagramm (Erreger- bzw. Eigenfrequenzen über der Motordrehzahl) dar, erkennt man, dass im Betriebsbereich herkömmlich ausgelegter Motoren Schnittpunkte der vom Motor anregbaren Torsionseigenfrequenz (üblicherweise die erste Torsionseigenfrequenz) mit den interharmonischen Erregerfrequenzen auftreten. Ein stationärer Betrieb des mechanischen Systems in einem dieser Schnittpunkte von interharmonischer Anregung und Torsionseigenfrequenz führt zu einem Resonanzzustand mit hohen Torsionsschwingungsamplituden und somit zu hohen dynamischen Torsionsspannungen in den Drehmomentübertragenden Strangkomponenten. Die hieraus möglicherweise resultierenden Folgen wie z.B. Ermüdungsschäden der belasteten Strangkomponenten sind zu vermeiden

Antriebe mit Umrichter-geführten elektrischen Motoren weisen in der Regel einen Frequenzumrichter und einen elektrischen Synchron- oder Asynchronmotor auf. Während die Eingangsfrequenz in den Umrichter aufgrund der nahezu perfekten Umlaufbewegung der Energieerzeugungsaggregate, die die Netzfrequenz speisen, als reine Sinusschwingung ausgebildet ist, zeigt das Spektrum der Frequenzanalyse, dass der Ausgang aus dem Umrichter zusätzlich zu der Sollfrequenz noch andere Frequenzen aufweist, die zu Anregungen von Torsionsschwingungen führen können. Derartige unerwünschte Nebenfrequenzen, die sich bisher kaum vermeiden lassen, werden auch als harmonische bzw. interharmonische Erregerfrequenzen bezeichnet. Üblicherweise führen die interharmonischen Erregerfrequenzen innerhalb des üblichen Betriebsdrehzahlbereiches des Motors zu einer Anregung von Torsionsschwingungen des gesamten Antriebsstranges beispielsweise von angetriebenen Verdichtersträngen oder sonstigen Turbosätzen.

Sofern sich im mechanischen Strang kein Zwischengetriebe befindet, kann die zusätzliche Belastung, verursacht durch die angeregte Torsionsschwingung, weitestgehend unbemerkt verlaufen. Jedoch verursachen die ungewollten dynamischen Zusatzbelastungen in den mechanischen Strangkomponenten eine erheblich verkürzte Standzeit aufgrund von Bauteilermüdung.

Ist ein Getriebe Bestandteil der Maschine, kommt es innerhalb des Getriebes im Zahneingriff zu einer Kopplung zwischen Torsionsschwingungen und Radialschwingungen. Somit wirken sich die Torsionsschwingungen im Getriebe ebenfalls Standzeit-verkürzend aus. Zusätzlich kommt es zu unerwünschten hohen Radialschwingungen und zu unerwünschten erhöhten Geräuschemissionen (Getriebeklappern).

Die Problematik der unerwünschten Torsionsschwingungen lässt sich häufig nur mittels einer dynamischen Torsionsmomentenmessung feststellen. Eine solche Messung wird üblicherweise nicht zur permanenten Überwachung eines Turbostranges eingesetzt und würde jedoch auch nur vorhandene Torsionsresonanzen identifizieren aber deren Entstehung nicht ursächlich vermeiden.

Aus dem Aufsatz "Damping torsional interharmonic effects of large drives" (POWER ELECTRONICS AND MOTION CONTROL CONFERENCE, 2009, SCHRAMM S ET AL) und dem Aufsatz "TORSIONAL INTERHARMONIC INTERACTION STUDY OF 75 MW DIRECT-DRIVEN VSDS MOTOR COMPRESSOR TRAINS FOR LNG DUTY" (PROCEEDINGS OF THE THIRTY-SEVENTH TURBO MACHINERY SYPOSIUM 2008, VOLKER HÜTTEN ET AL) sind die Bedeutung von interharmonischen Schwingungen für Maschinenstränge zumindest teilweise bekannt.

Ausgehend von den Problemen des Standes der Technik hat es sich die Erfindung zur Aufgabe gemacht, die Laufruhe von Maschinen mit Umrichter-geführten Antrieben zu verbessern und dadurch die möglichen Folgen hoher Schwingungen, wie z.B. Ermüdungsschäden, zu vermeiden

Erfindungsgemäß wird vorgeschlagen, eine Maschine der eingangs definierten Art gemäß der Merkmale des kennzeichnenden Teils des Anspruchs 1 auszubilden. Weiterhin wird vorgeschlagen, die Maschine gemäß dem Verfahren nach Anspruch 12 zu betreiben.

Ein Betriebsdrehzahlbereich gibt hierbei den der Auslegung der Maschine zugrunde gelegten Bereich der Drehzahl eines Rotors an, in dem sich die Drehzahl während mindestens 90% der angenommenen Betriebsdauer befindet.

Eine besonders vorteilhafte Weiterbildung der Erfindung sieht vor, dass der umrichtergeführte Antrieb eine Anzahl an Polpaaren aufweist, welche in Verbindung mit einen vorbestimmten Motorspeisefrequenzbetriebsbereich des Umrichters, eine Motorspeisefrequenz bzw. einen Betriebsdrehzahlbereich definiert, die außerhalb der Konzentrationsbereiche G1 bis Gz liegen.

Der bevorzugte Einsatzbereich der Erfindung sind Maschinen, die als Turbosatz ausgebildet sind, insbesondere Maschinen, die mindestens einen Turboverdichter aufweisen. Die heute übliche Wahl des Antriebes verursacht, dass die Konzentrationsbereiche G1, ... Gz Schnittpunkte mit der Torsionseigenfrequenz im Fahrbereich und somit hohe Torsionsbelastungen der Strangkomponenten verursachen. Soweit die Übertragung des Drehmoments von einem Umrichter-geführten Antrieb auf die Arbeitsmaschine erfolgt, können bei Kenntnis der interharmonischen Torsionserregungen durch eine gezielte Wahl der Polpaarzahl (PPZ) des Antriebes Torsionsresonanzzustände im Betriebsdrehzahlbereich des Antriebes vermieden werden. Auf diese Weise weicht der Motor den interharmonischen Erregerfrequenz des Umrichters durch Verschieben des Betriebsdrehzahlbereiches auf einen niedrigeren oder höheren Drehzahlbereich aus.

Bei Verwendung eines Getriebes können über eine gezielte Abstimmung des Übersetzungsverhältnisses weitere sich ergebene resonanzfreie Betriebsdrehzahlbereiche genutzt werden. Beispielsweise zweckmäßig ist es hierbei, wenn das Getriebe die Drehzahl des Umrichter-geführten Antriebes auf eine höhere Drehzahl an der Arbeitsmaschine übersetzt. Insbesondere kann eine Polpaarzahl von > 2 des Umrichter-geführten Antriebes in Kombination mit einem auf eine höhere Drehzahl übersetzenden Getriebes für die Arbeitsmaschine, die Erfindungen besonders vorteilhaft umsetzen, wenn mindestens ein Konzentrationsbereich im Bereich der Eingangsfrequenz in den Umrichter liegt, was verhältnismäßig häufig der Fall ist. Auf diese Weise weicht der Motor der interharmonischen Erregerfrequenz des Umrichters in Richtung einer niedrigeren Drehzahl aus und das Getriebe übersetzt diese niedrigere Drehzahl auf die gewünschte Drehzahl der Arbeitsmaschine bzw. in einen entsprechenden Betriebsdrehzahlbereich.

Soweit eine Anregung der zweiten und/oder dritten Torsionseigenfrequenz mechanisch möglich ist, ist diese in gleicher Weise (mutatis mutandis) wie zuvor für die erste Torsionseigenfrequenz beschrieben zu berücksichtigen.

In der Folge ist ein spezielles Ausführungsbeispiel beschrieben, wobei dies lediglich der Illustration der Erfindung dient und auch andere Möglichkeiten der Umsetzung der Erfindung für den Fachmann denkbar sind, insbesondere mittels beliebiger Kombination der in den Ansprüchen definierten Merkmale.
- Figur 1: zeigt eine vereinfachte Darstellung einer erfindungsgemäßen Maschine,
- Figur 2: zeigt ein Campbell-Diagramm, charakteristisch für den in Figur 1 exemplarisch dargestellten Umrichter,
- Figur 3: zeigt einen Ausschnitt aus dem Campbell-Diagramm der Figur 2 und die Umsetzungsmöglichkeiten in Bezug auf den Betriebsdrehzahlbereich der Maschine.

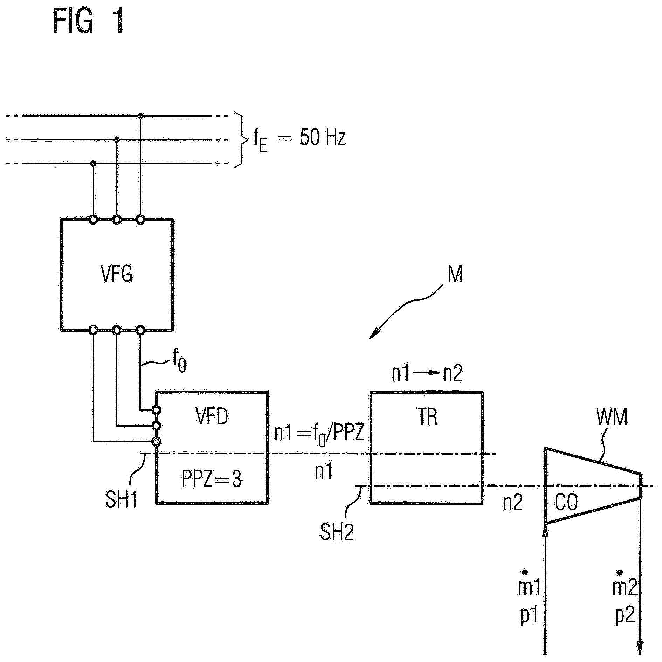

Figur 1 zeigt eine erfindungsgemäße Maschine M schematisch. Wesentliche Bestandteile der erfindungsgemäßen Maschine M sind der (Frequenz-) Umrichter VFG, ein Umrichter-geführter Antrieb VFD mit einer variablen Drehzahl n₁ und eine Arbeitsmaschine WM, die hier als Verdichter CO ausgebildet ist. Das Ausführungsbeispiel umfasst darüber hinaus noch ein Übersetzungsgetriebe TR, welches die von dem Antrieb VFD erzeugte Drehzahl an einer ersten Welle SH1 auf eine zweite Drehzahl n2 an einer zweiten Welle SH2 übersetzt, die den Verdichter CO antreibt. Der Verdichter CO fördert einen Massenstrom M1 von einem ersten Druck P1 auf einen höheren zweiten Druck P2. Der Umrichter VFG erzeugt aus der Netzfrequenz von z.B. 50Hz (Eingangsfrequenz fE) eine Ausgangsfrequenz f0, mit der der Antrieb gespeist wird. Der Antrieb VFD dreht sich in Abhängigkeit von der Ausgangsfrequenz f0 aus dem Umrichter VFG und abhängig von der Anzahl an Polpaaren (PPZ = Polpaarzahl) mit der Drehzahl n1. Die Drehzahl n1 entspricht hierbei dem Quotienten aus der Ausgangsfrequenz f0 aus dem Umrichter VFG und der Polpaarzahl PPZ. Die Anordnung aus dem Antrieb VFD, der ersten Welle SH1, dem Getriebe TR, der zweiten Welle SH2 und der Arbeitsmaschine WM weist, bezogen auf die Wellen, Torsionseigenfrequenzen FT1, FT2, FTi auf, so dass während eines Betriebes in der Nähe dieser Frequenzen hohe Schwingungsamplituden auftreten können. Weiterhin können durch die Torsions-Biegeschwingungskopplung insbesondere in Zwischengetrieben, durch Torsionsschwingungen auch Radialschwingungen angeregt werden. Bei dem Umrichter VFG handelt es sich um einen Stromzwischenkreisumrichter (LCI). Alternativ kann es sich bei dem Umrichter auch um einen Spannungsumrichter handeln.

Wie bereits eingangs erläutert, ist die von dem Umrichter VFG erzeugte Ausgangsfrequenz f0 darstellbar als eine reine Sinusschwingung mit einer Sollfrequenz überlagert von weiteren Anteilen harmonischer und interharmonischer Schwingungen mit einer anderen Frequenz.

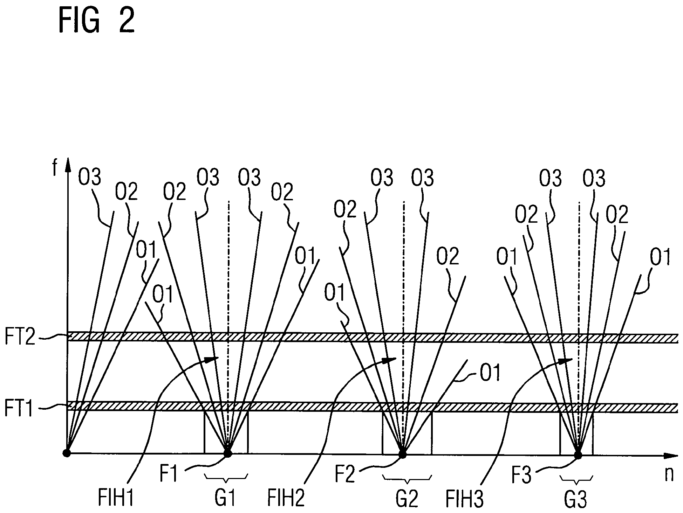

Figur 2 zeigt hierzu eine schematische Darstellung des Campbell-Diagramms, die diese sogenannten interharmonischen Erregerfrequenzen des Umrichterausgangs darstellt. Diese Erregerfrequenzen werden im Umrichter generiert und im Motor über den Luftspalt zwischen Stator und Rotor auf das mechanische System als Drehmomentschwankung übertragen.

Das Campbell-Diagramm findet Anwendung in allen Bereichen der Schwingungstechnik, beispielweise zur Darstellung von Schwingungen von Rotoren und Schaufeln. Das Diagramm eignet sich dazu, die Schwingungsabstimmung z.B. im gesamten Betriebsdrehzahlbereich zu beurteilen und mögliche Resonanzzustände zu identifizieren.

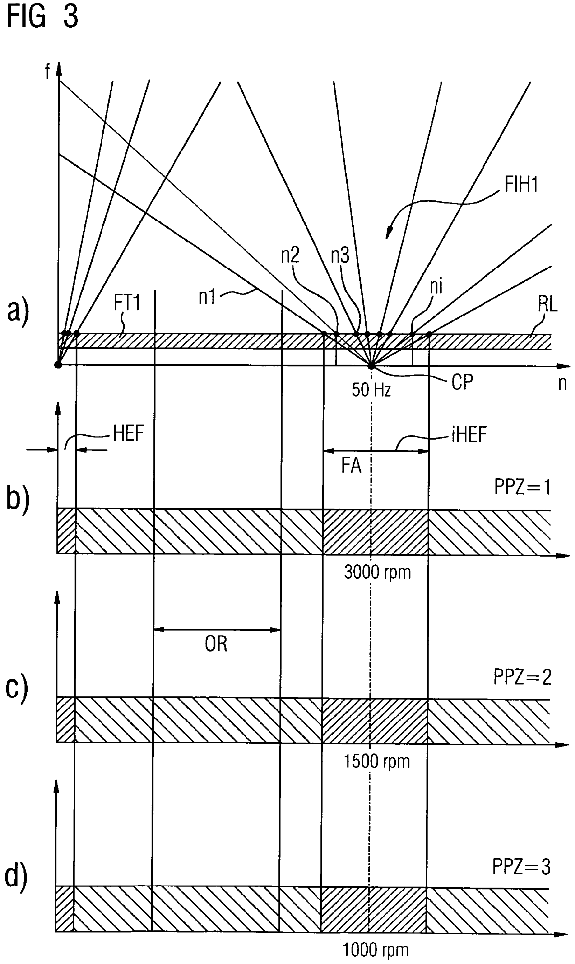

Eigenfrequenzen können auch als Frequenzband dargestellt werden, dessen Breite sich aus der Varianz der Berechnungsmodelle ergibt. Neben den harmonischen Erregerfrequenzen gibt es für diese Art von Anwendungsfällen auch Spektralkomponenten, die als interharmonische Erregerfrequenzen bezeichnet werden. Im Campbell-Diagramm der Figuren 2 und 3 stellen sich die interharmonischen Erregerfrequenzen FIH1, FIH2, FIH3 jeweils als Geraden dar, die jeweils einen symmetrischen Partner haben, welche Partnergerade den gleichen Steigungsbetrag anderen Vorzeichens aufweist. Auf der Abszisse des Campbell-Diagramms schneiden sich die Geraden, welche die Abhängigkeit der interharmonischen Erregerfrequenzen zur Antriebsdrehzahl anzeigen. Neben den harmonischen Erregerfrequenzen, die sich im Campbell-Diagramm der Figur 2 als eine Schar von Geraden durch den Nullpunkt des Diagramms darstellen, zeigt die Figur 2 beispielhaft drei Geraden-Scharen, welche interharmonische Erregerfrequenzen in Abhängigkeit von der Antriebsdrehzahl anzeigen, welche jeweils einen Ausgangspunkt auf der Abszisse haben.

In Figur 3 ist der Fall verschiedener Polpaarzahlen für den Antrieb (PPZ = 1, 2, 3) gezeigt. Als horizontale Linie ist dem oberen Diagramm mit einer gewissen Breite entsprechend der Varianz typischer Torsionseigenfrequenzen möglicher Turboverdichterstränge eingezeichnet. Die harmonischen und interharmonischen Frequenzverläufe entsprechend der Geraden durch den Ursprung bzw. durch den ersten Konzentrationspunkt CP werden durch den Umrichter generiert. Die Schnittpunkte der Geraden (hier exemplarisch nur als Schnittpunkt der oberen Grenze des Torsionseigenfrequenzbereiches eingezeichnet) mit dem Torsionseigenfrequenzband RL des Verdichterstrangs ergeben Drehfrequenzen n1, ...,ni, welche sich um den Konzentrationspunkt CP gruppieren. Der durch die äußeren Elemente der Gruppierung definierte Bereich FA zählt nicht zu dem angestrebten resonanzfreien Betriebsdrehzahlbereich des als Beispiel eingetragenen Bereichs OR der Maschine M. Der eingezeichnete Betriebsdrehzahlbereich OR ist beispielhaft vorliegend zwischen dem durch den aufgespannten Sperrbereichen der harmonischen Erregerfrequenzen HEF bei niedriger Drehzahl und dem Sperrbereich FA aufgespannt durch die interharmonischen Erregerfrequenzen iHEF angeordnet. Der Betriebsdrehzahlbereich OR ist hier exemplarisch eingezeichnet und kann selbstverständlich in allen möglichen resonanzfreien Drehzahlbereichen, somit auch oberhalb des hier eingezeichneten Konzentrationsbereiches, gelegt werden. Erfindungsgemäß kann die Ausgangsfrequenz FO des Umrichters in Kombination mit der Polpaarzahl PPZ des Antriebes VFD so gewählt werden, dass innerhalb des gewünschten Betriebsdrehzahlbereiches keine signifikanten Torsionsanregungen durch interharmonische Erregerfrequenzen auftreten. Die Lage der interharmonischen Erregerfrequenzen ist von der Charakteristik und der Eingangsfrequenz (Netzfrequenz) FE in den Umrichter VFG abhängig. Mit der Polpaarzahl PPZ kann die Lage des Betriebsdrehzahlbereichs OR zu dem von den interharmonischen Erregerfrequenzen aufgespannten Sperrbereich FA bestimmt werden. Wie in dem Beispieldiagramm c) dargestellt, kann eine Polpaarzahl PPZ = 2 den Sperrbereich um einen Konzentrationspunkt CP um 1500 RPM statt um 3000 RPM bei einer Polpaarzahl PPZ = 1 verlagern. Entsprechend reduziert sich die Breite des Konzentrationsbereichs CP des Sperrbereiches FA bei einer Polpaarzahl von PPZ = 3 auf ein Drittel bei 1000 RPM.

## Patentansprüche

1. Maschine (M) mit einem umrichtergeführten Antrieb (VFD) mit variabler Drehfrequenz,
wobei der Antrieb (VFD) als elektrischer Motor ausgebildet ist,
mit einer Arbeitsmaschine (WM), wobei der Antrieb (VFD) und die Arbeitsmaschine (WM) derart miteinander verbunden sind, dass ein Drehmoment übertragbar ist,
wobei die Maschine (M) mindestens einen Rotor (R) umfasst, mit einem Frequenzumrichter (VFG), der elektrisch an den Antrieb (VFD) angeschlossen ist und eine Eingangsfrequenz auf eine Ausgangsfrequenz umrichtet,
wobei der Umrichter derart ausgebildet ist, dass sich in einem Campbell-Diagramm bezogen auf die Maschine (WM) Schnittpunkte der vom Antrieb (VFD) anregbaren Torsionseigenfrequenz des Rotors (R) mit V-förmigen symmetrischen Geraden der interharmonischen Erregerfrequenz für Ausgangsfrequenzen F1, F2, F3, ..., Fi ergeben,
wobei Ausgangsfrequenzen F1, ..., Fi gruppiert sind in auf die Maschinendrehzahl bezogene Konzentrationsbereiche G1, ..., Gi, ..., Gz,
wobei in Konzentrationsbereichen Gi zueinander derart naheliegende Ausgangsfrequenzen Fi zusammengefasst sind, die miteinander jeweils einen gemeinsamen Ausgangspunkt auf der Abszisse haben,
wobei die obere und untere Grenze des Konzentrationsbereichs G1, ..., Gi, ...Gz definiert sind durch die Schnittpunkte der niedrigsten und/oder zweitniedrigsten, und/oder drittniedrigsten Torsionseigenfrequenz des Rotors mit den beiden Geraden des Strahlenpaars der Interharmonischen erster Ordnung des jeweiligen Konzentrationsbereichs G1, ..., Gi, ...Gz,
**dadurch gekennzeichnet, dass** die Schnittpunkte der jeweiligen Torsionseigenfrequenz mit den beiden Geraden des Strahlenpaars der Interharmonischen die Schnittpunkte der oberen Grenze des jeweiligen Torsionseigenfrequenzbereiches mit den beiden Geraden des Strahlenpaars der Interharmonischen sind, wobei jeder Konzentrationsbereich G1, ..., Gi, ...Gz einen Sperrbereich (FA) definiert,
wobei die Maschine einen Betriebsdrehzahlbereich (OR) aufweist, welcher außerhalb der Sperrbereiche (FA) liegt.

2. Maschine (M) nach Anspruch 1,
wobei der Antrieb VFD eine Anzahl von Polpaaren (PPZ) aufweist, welche gemeinsam mit einem Motorspeisefrequenzbereich einen
Betriebsdrehzahlbereich (OR) definieren, welcher außerhalb der Sperrbereiche (FA) liegt.

3. Maschine (M) nach Anspruch 1,
wobei zwischen dem Antrieb (VFD) und der Arbeitsmaschine (WM) ein Getriebe (TR) zur Übersetzung der Drehzahl (ni) des Antriebs (VFD) auf eine andere Drehzahl (n2) der Arbeitsmaschine (WM) bewirkt.

4. Maschine (M) nach Anspruch 3,
wobei die Drehzahl (n2) der Arbeitsmaschine (WM) höher ist als die Drehzahl (n1) des Antriebs (VFD).

5. Maschine (M) nach einem der vorhergehenden Ansprüche, wobei es sich bei dem Umrichter (VFG) um einen Stromzwischenkreisumrichter (LCI) handelt.

6. Maschine (M) nach einem der vorhergehenden Ansprüche, wobei es sich bei dem Umrichter (VFG) um einen Spannungsumrichter handelt.

7. Maschine (M) nach einem der vorhergehenden Ansprüche, wobei es sich bei dem Antrieb (VFD) um einen Synchronmotor handelt.

8. Maschine (M) nach einem der vorhergehenden Ansprüche, wobei es sich bei dem Antrieb (VFD) um einen Asynchronmotor handelt.

9. Maschine (M) nach einem der vorhergehenden Ansprüche, wobei die maximale Aufnahmeleistung des Antriebs (VFD) mindestens ein Megawatt beträgt.

10. Maschine (M) nach mindestens einem der vorhergehenden Ansprüche,
wobei die Arbeitsmaschine (WM) eine Turbomaschine ist.

11. Maschine (M) nach Anspruch 10,
wobei die Arbeitsmaschine (WM) ein Turboverdichter (CO) ist.

12. Verfahren zum Betrieb einer Maschine (M), insbesondere einer Maschine (M) gemäß mindestens einer der Ansprüche 1 bis 11,
wobei die Maschine (M) einen umrichtergeführten Antrieb (VFD) mit variabler Drehfrequenz aufweist,
wobei der Antrieb (VFD) als elektrischer Motor ausgebildet ist,
wobei die Maschine (M) eine Arbeitsmaschine (WM) aufweist,
wobei der Antrieb (VFD) und die Arbeitsmaschine (WM) derart miteinander verbunden sind, dass ein Drehmoment übertragbar ist,
wobei die Maschine (M) mindestens einen Rotor (R) umfasst,
wobei die Maschine (M) einen Frequenzumrichter (VFG) umfasst, der elektrisch an den Antrieb (VFD) angeschlossen ist und eine Eingangsfrequenz auf eine Ausgangsfrequenz umrichtet,
wobei der Umrichter derart betrieben wird, dass sich in einem Campbell-Diagramm bezogen auf die Maschine (WM) Schnittpunkte der vom Antrieb (VFD) anregbaren Torsionseigenfrequenz des Rotors (R) mit V-förmigen symmetrischen Geraden der interharmonischen Erregerfrequenz für Ausgangsfrequenzen F1, F2, F3, ..., Fi ergeben,
wobei Ausgangsfrequenzen F1, F2, F3, ..., Fi gruppiert sind in auf die Maschinendrehzahl bezogene Konzentrationsbereiche G1, ..., Gi, ..., Gz
wobei in Konzentrationsbereiche Gi zueinander derart naheliegende Ausgangsfrequenzen Fi zusammengefasst sind, die miteinander jeweils einen gemeinsamen Ausgangspunkt auf der Abszisse haben,
wobei die obere und untere Grenze des Konzentrationsbereichs G1, ..., Gi, ...Gz definiert sind durch die Schnittpunkte der niedrigsten und/oder zweitniedrigsten, und/oder drittniedrigsten Torsionseigenfrequenz des Rotors mit den beiden Geraden des Strahlenpaars der Interharmonischen erster Ordnung des jeweiligen Konzentrationsbereichs G1, ..., Gi, ...Gz
**dadurch gekennzeichnet, dass** die Schnittpunkte der jeweiligen Torsionseigenfrequenz mit den beiden Geraden des Strahlenpaars der Interharmonischen die Schnittpunkte der oberen Grenze des jeweiligen Torsionseigenfrequenzbereiches mit den beiden Geraden des Strahlenpaars der Interharmonischen sind, wobei jeder Konzentrationsbereich G1, ..., Gi, ...Gz einen Sperrbereich (FA) definiert,
wobei die Maschine einen Betriebsdrehzahlbereich (OR) aufweist, welcher außerhalb der Sperrbereiche (FA) liegt.

## Claims

1. Machine (M) having a converter-controlled drive (VFD) with a variable rotational frequency,
wherein the drive (VFD) is configured as an electric motor, having a working machine (WM), wherein the drive (VFD) and the working machine (WM) are connected to one another in such a way that a torque can be transmitted,
wherein the machine (M) comprises at least one rotor (R), having a frequency converter (VFG) which is electrically connected to the drive (VFD) and converts an input frequency to an output frequency,
wherein the converter is embodied in such a way that in a Campbell diagram relating to the machine (WM) intersection points of the natural torsional frequency of the rotor (R), which can be excited by the drive (VFD), with V shaped symmetrical straight lines of the inter-harmonic exciter frequency result for output frequencies F1, F2, F3, ..., Fi,
wherein output frequencies F1, ..., Fi are grouped into concentration ranges G1, ..., Gi, ..., Gz, related to the machine rotational speed,
wherein output frequencies Fi which are close to one another and which respectively have a common output point on the abscissa, are combined in concentration ranges Gi,
wherein the upper and the lower limits of the concentration range G1, ..., Gi, ...Gz are defined by the intersection points of the lowest and/or second lowest and/or third lowest natural torsional frequency of the rotor with the two straight lines of the beam pair of the inter-harmonics of the first order of the respective concentration range G1, ..., Gi, ...Gz, **characterized in that** the intersection points of the respective natural torsional frequency with the two straight lines of the beam pair of the inter-harmonics are the intersection points of the upper limit of the respective natural torsional frequency range with the two straight lines of the beam pair of the inter-harmonics, wherein each concentration range G1, ..., Gi, ...Gz, defines a blocking range (FA),
wherein the machine has an operating rotational speed range (OR) which lies outside the blocking ranges (FA).

2. Machine (M) according to Claim 1,
wherein the drive VFD has a number of pole pairs (PPZ) which, together with a motor feeding frequency range, define an operating rotational speed range (OR) which lies outside the blocking ranges (FA).

3. Machine (M) according to Claim 1,
wherein a transmission (TR) for transmitting the rotational speed (ni) of the drive (VFD) to another rotational speed (n2) of the working machine (WM) acts between the drive (VFD) and the working machine (WM).

4. Machine (M) according to Claim 3,
wherein the rotational speed (n2) of the working machine (WM) is higher than the rotational speed (n1) of the drive (VFD).

5. Machine (M) according to one of the preceding claims, wherein the converter (VFG) is a current intermediate-circuit converter (LCI).

6. Machine (M) according to one of the preceding claims, wherein the converter (VFG) is a voltage converter.

7. Machine (M) according to one of the preceding claims, wherein the drive (VFD) is a synchronous motor.

8. Machine (M) according to one of the preceding claims, wherein the drive (VFD) is an asynchronous motor.

9. Machine (M) according to one of the preceding claims, wherein the maximum absorption capacity of the drive (VFD) is at least one megawatt.

10. Machine (M) according to at least one of the preceding claims,
wherein the working machine (WM) is a turbo-machine.

11. Machine (M) according to Claim 10,
wherein the working machine (WM) is a turbo compressor (CO).

12. Method for operating a machine (M), in particular a machine (M) according to at least one of Claims 1 to 11,
wherein the machine (M) has a converter-controlled drive (VFD) with a variable rotational frequency,
wherein the drive (VFD) is configured as an electric motor,
wherein the machine (M) has a working machine (WM), wherein the drive (VFD) and the working machine (WM) are connected to one another in such a way that a torque can be transmitted,
wherein the machine (M) comprises at least one rotor (R), wherein the machine (M) comprises a frequency converter (VFG) which is electrically connected to the drive (VFD) and converts an input frequency to an output frequency,
wherein the converter is operated in such a way that in a Campbell diagram relating to the machine (WM) intersection points of the natural torsional frequency of the rotor (R), which can be excited by the drive (VFD), with V shaped symmetrical straight lines of the inter-harmonic exciter frequency result for output frequencies F1, F2, F3, ..., Fi,
wherein output frequencies F1, F2, F3, ..., Fi are grouped into concentration ranges G1, ..., Gi, ..., Gz, related to the machine rotational speed,
wherein output frequencies Fi which are close to one another and which respectively to one another have a common output point on the abscissa, are combined in concentration ranges Gi, wherein the upper and the lower limits of the concentration range G1, ..., Gi, ...Gz are defined by the intersection points of the lowest and/or second lowest and/or third lowest natural torsional frequency of the rotor with the two straight lines of the beam pair of the inter-harmonics of the first order of the respective concentration range G1, ..., Gi, ...Gz, **characterized in that** the intersection points of the respective natural torsional frequency with the two straight lines of the beam pair of the inter-harmonics are the intersection points of the upper limit of the respective natural torsional frequency range with the two straight lines of the beam pair of the inter-harmonics,
wherein each concentration range G1, ..., Gi, ...Gz defines a blocking range (FA),
wherein the machine has an operating rotational speed range (OR) which lies outside the blocking ranges (FA).

## Revendications

1. Machine (M) ayant un entraînement (VFD) commandé par convertisseur et à fréquence de rotation variable, l'entraînement (VFD) étant constitué sous la forme d'un moteur électrique,
comprenant une machine (WM) fournissant du travail, l'entraînement (VFD) et la machine (WM) fournissant du travail étant reliés l'un à l'autre de manière à pouvoir transmettre un couple,
dans laquelle la machine (M) comprend au moins un rotor (R) ayant un convertisseur (VFG) de fréquence, qui est raccordé électriquement à l'entraînement (VFD) et qui transforme une fréquence d'entrée en une fréquence de sortie, le convertisseur étant constitué de manière à obtenir, dans un diagramme de Campbell rapporté à la machine (WM), des points d'intersection de la fréquence propre de torsion, excitable par l'entraînement (VFD), du rotor (R) avec des droites symétriques en forme de V de la fréquence d'excitation inter-harmonique pour des fréquences F1, F2, F3, ..., Fi de sortie, dans laquelle des fréquences F1, ..., Fi de sortie sont regroupées en des plages G1, ..., Gi, ..., Gz de concentration rapportées à la vitesse de rotation de la machine,
dans laquelle, dans des plages Gi de concentration, sont rassemblées des fréquences Fi de sortie voisines l'une de l'autre, qui ont, entre elles, respectivement une origine commune sur les abscisses,
dans laquelle la limite supérieure et la limite inférieure de la plage G1, ..., Gi, ..., Gz de concentration sont définies par les points d'intersection de la fréquence propre de torsion la plus basse et/ou la plus basse en deuxième et/ou la plus basse en troisième du rotor avec les deux droites de la paire de rayons des inter-harmoniques du premier ordre de la plage G1, ..., Gi, ..., Gz de concentration respective,
**caractérisée en ce que** les points d'intersection de la fréquence propre de torsion respective avec les deux droites de la paire de rayons des inter-harmoniques sont les points d'intersection de la limite supérieure de la plage de fréquence propre de torsion respective avec les deux droites de la paire de rayons des inter-harmoniques, dans laquelle chaque plage G1, ..., Gi, ..., Gz de concentration définie une plage (FA) d'arrêt,
la machine ayant une plage (OR) de vitesse de rotation de fonctionnement, qui est à l'extérieur de la plage (FA) d'arrêt.

2. Machine (M) suivant la revendication 1,
dans laquelle l'entraînement VFD a un nombre de paires (PPZ) de pôles, qui définissent, conjointement avec une plage de fréquence d'alimentation du moteur, une plage (OR) de vitesse de rotation de fonctionnement, qui est en dehors des plages (FA) d'arrêt.

3. Machine (M) suivant la revendication 1,
dans laquelle une transmission (TR), entre l'entraînement (VFD) et la machine (WM) fournissant du travail, provoque le passage de la vitesse (ni) de rotation de l'entraînement (VFD) à une autre vitesse (n2) de rotation de la machine (WM) fournissant du travail.

4. Machine (M) suivant la revendication 3,
dans laquelle la vitesse (n2) de rotation de la machine (WM) fournissant du travail est plus grande que la vitesse (n1) de rotation de l'entraînement (VFD).

5. Machine (M) suivant l'une des revendications précédentes, dans laquelle le convertisseur (VFG) est un convertisseur (LCI) à circuit intermédiaire de courant.

6. Machine (M) suivant l'une des revendications précédentes, dans laquelle le convertisseur (VFG) est un convertisseur de tension.

7. Machine (M) suivant l'une des revendications précédentes, dans laquelle l'entraînement (VFD) est un moteur synchrone.

8. Machine (M) suivant l'une des revendications précédentes, dans laquelle l'entraînement (VFD) est un moteur asynchrone.

9. Machine (M) suivant l'une des revendications précédentes, dans laquelle la puissance absorbée maximum de l'entraînement (VFD) est d'au moins un mégawatt.

10. Machine (M) suivant au moins l'une des revendications précédentes,
dans laquelle la machine (WM) fournissant du travail est une turbomachine.

11. Machine (M) suivant la revendication 10,
dans laquelle la machine (WM) fournissant du travail est un turbocompresseur (CO).

12. Procédé pour faire fonctionner une machine (M), notamment une machine (M) suivant au moins l'une des revendications 1 à 11,
dans lequel la machine (M) a un entraînement (VFD) commandé par convertisseur et à fréquence de rotation variable,
dans lequel l'entraînement (VFD) est constitué sous la forme d'un moteur électrique,
dans lequel la machine (M) a une machine (WM) fournissant du travail, l'entraînement (VFD) et la machine (WM) fournissant du travail étant reliés l'un à l'autre de manière à pouvoir transmettre un couple,
dans lequel la machine (M) a au moins un rotor (R),
dans lequel la machine (M) comprend un convertisseur (VFG) de fréquence, qui est raccordé électriquement à l'entraînement (VFD) et qui transforme une fréquence d'entrée en une fréquence de sortie, le convertisseur fonctionnant de manière à donner, dans un diagramme de Campbell rapporté à la machine (WM), des points d'intersection de la fréquence propre de torsion, excitable par l'entraînement (VFD), du rotor (R) avec des droites symétriques en forme de V de la fréquence d'excitation inter-harmonique pour des fréquences F1, F2, F3, ..., Fi de sortie,
dans laquelle des fréquences F1, ..., Fi de sortie sont regroupées en des plages G1, ..., Gi, ..., Gz de concentration rapportées à la vitesse de rotation de la machine,
dans laquelle, dans des plages Gi de concentration, sont rassemblées des fréquences Fi de sortie voisines l'une de l'autre, qui ont, entre elles, respectivement une origine commune sur les abscisses,
dans laquelle la limite supérieure et la limite inférieure de la plage G1, ..., Gi, ..., Gz de concentration sont définies par les points d'intersection de la fréquence propre de torsion la plus basse et/ou la plus basse en deuxième et/ou la plus basse en troisième du rotor avec les deux droites de la paire de rayons des inter-harmoniques du premier ordre de la plage G1, ..., Gi, ..., Gz de concentration respective,
**caractérisée en ce que** les points d'intersection de la fréquence propre de torsion respective avec les deux droites de la paire de rayons des inter-harmoniques sont les points d'intersection de la limite supérieure de la plage de fréquence propre de torsion respective avec les deux droites de la paire de rayons des inter-harmoniques, dans laquelle chaque plage G1, ..., Gi, ..., Gz de concentration définie une plage (FA) d'arrêt,
la machine ayant une plage (OR) de vitesse de rotation de fonctionnement, qui est à l'extérieur de la plage (FA) d'arrêt.
